Europäisches Patentamt

European Patent Office

Office européen des brevets

(19)

(11) Publication number : **0 390 438 B1**

(12) **EUROPEAN PATENT SPECIFICATION**

(45) Date of publication of patent specification :
09.12.92 Bulletin 92/50

(51) Int. Cl.[5] : **A23G 3/00**, A23L 1/236,
A23L 2/26

(21) Application number : **90303139.1**

(22) Date of filing : **23.03.90**

(54) **Sweetening compostions comprising sucralose and isomaltulose.**

(30) Priority : **28.03.89 GB 8907007**

(43) Date of publication of application :
**03.10.90 Bulletin 90/40**

(45) Publication of the grant of the patent :
**09.12.92 Bulletin 92/50**

(84) Designated Contracting States :
**AT BE CH DE DK ES FR GR IT LI LU NL SE**

(56) References cited :
**EP-A- 0 028 897**
**EP-A- 0 028 905**
**WO-A-89/03182**
**GB-A- 2 153 651**

(73) Proprietor : **TATE & LYLE PUBLIC LIMITED
COMPANY**
**Sugar Quay Lower Thames Street**
**London, EC3R 6DU (GB)**

(72) Inventor : **Beyts, Pamela Kay**
**72 Grosvenor Road, Caversham**
**Reading, Berks (GB)**

(74) Representative : **Ablewhite, Alan James et al**
**MARKS & CLERK 57/60 Lincoln's Inn Fields**
**London WC2A 3LS (GB)**

EP 0 390 438 B1

Jouve, 18, rue Saint-Denis, 75001 PARIS

## Description

This invention relates to sweetening compositions comprising sucralose and isomaltulose, the compositions exhibiting synergy, i.e. providing greater sweetness than would be expected from simple summation of the sweetness contributed by the component sweetening agents.

Sucralose (1,6-dichloro-1,6-dideoxy-$\beta$-D-fructofuranosyl 4-chloro-4-deoxy-$\alpha$-D-galactopyranoside) is a high intensity sweetener disclosed in British Patent No. 1,543,167. Isomaltulose, also known as Palatinose (6-0($\alpha$-D-glucopyranosyl)-D-fructofuranose), is a sweet disaccharide which can be used as a substitute for sucrose as disclosed in British Patent No. 2,066,639 B.

Synergy is exhibited by compositions comprising sucralose and certain other high intensity sweeteners having an accompanying bitter taste, particularly saccharin, acesulfame-K and stevioside (GB 2,098,848 B), and in compositions comprising sucralose and cyclamate (GB 2,154,850 B). Synergy is not found in compositions consisting of sucralose and the dipeptide high intensity sweetener aspartame, although the quality of sweetness is improved (GB 2,153,651 B). Furthermore, no synergy is found between sucralose and sucrose (GB 2,153,651 B).

In our co-pending British Patent Application No. GB 2 210 545A, we disclose synergistic combinations of sucralose and certain saccharides, including fructose, glucose, maltose and other gluco-oligosaccharides and sugar alcohols. We have now found that synergy extends to combinations of sucralose and isomaltulose.

The scale of synergy is surprisingly high considering that with sucrose there is no significant synergy. Thus combinations of isomaltulose and sucralose can show an increased sweetening power of about 13%.

According to the present invention there is provided a sweetening composition comprising sucralose and isomaltulose, the relative sweetness contribution provided by the sucralose and the sweet saccharide being from 4:1 to 1:4. By the term "sweetening composition", we mean a composition for use in sweetening foodstuffs, beverages, etc., e.g. sweetening tablets, sweet powders or granules for sprinkling on foods, concentrates for use in the manufacture of beverages, etc.

According to a further feature of the present invention there is provided a method of sweetening an oral composition comprising incorporating therein sucralose and isomaltulose such that the relative sweetness contribution provided by the sucralose and the isomaltulose is from 4:1 to 1:4. A ratio of from 3:2 to 2:3 is generally most useful, depending on the desired balance between bulk and sweetness. By the term 'oral composition' we mean any substance intended to be taken into the mouth. The term includes ingestible compositions such as foodstuffs, medicaments, confectionery, beverages etc. and also non-ingested materials such as mouthwashes and toothpaste.

According to a further feature of this invention there is provided an oral composition sweetened with a sweetening composition as defined above. Examples of such compositions include, in particular, soft drinks (cola, carbonated fruit drinks etc), confectionery and baked goods.

The synergy level quoted above is the increased sweetening power per unit weight obtained for the composition as a percentage of the expected degree of sweetening power (i.e. the sum of the sweetening power theoretically provided by each of the sweeteners). An alternative and more useful measure of synergy is the percentage saving, that is to say the difference between the amount actually needed to obtain a certain degree of sweetness and the theoretical amount needed, expressed as a percentage of the theoretical amount needed. On this basis the saving with isomaltulose is about 11.6%.

The following examples illustrate the invention:

Example 1 Measurement of synergy

Synergy was measured by determining the concentration of each sweetener or sweetener combination having the same degree of sweetness as sucrose at a given concentration i.e. the equisweet point.

The materials used were as follows:

Sucrose (granulated sugar)     - Tate & Lyle Sugars
Isomaltulose (Palatinose, TM)     - Mitsui Sugar Co., Japan
Sucralose     - Tate & Lyle Speciality Sweeteners

Sweeteners were prepared as solutions in tap water (pH 8±1) and served at a temperature of approximately 20°C. Concentrations are expressed as % (w/v).

The standard was a 5% solution of sucrose (Tate & Lyle granulated sugar in Reading tap water, pH about 8.0). The concentrations of sucralose, isomaltulose and sucrose which were equisweet to the standard sucrose solution were measured by taste panels using the constant stimulus paired comparison method (Amerine, Pangborn & Roessler, "Principles of Sensory Evaluation of Food", Academic Press New York).

A series of five or more concentrations of increasing intensity were prepared for each sweetener so that the mid-concentration was approximately the same sweetness as the sucrose control. Coded samples were presented in pairs to panellists, one of the pair being one of the test solutions and the other the sucrose control. Order of presentation of the pairs was randomised and within each pair half the panellists received the standard sucrose first, half the test solution first. Panellists were asked to choose the sweeter sample. "No difference" replies were allocated half to the sucrose control, half to the test sample.

Between sample pairs a one minute rest period was enforced. Panellists were instructed to rinse with water between pairs. The % panellists choosing the test sweetener level as sweeter than the sucrose standard was plotted against the % sweetener concentration. The results were subjected to probit analysis and for each solution the test concentration was calculated at which 50% of the responses would indicate the test sweetener to be sweeter than the sucrose standard: this is taken as the equisweet point or sucrose equivalent value (SEV).

The results were as follows:
Sucralose       0.00842%
Isomaltulose     13.3%

To determine the synergy of combinations of sucralose and the other sweetener, compositions were mixed which contained a theoretical 5% SEV (based on the SEVs listed above) with an equal sweetness contribution from each sweetener. Thus, since the 5% SEV for sucralose was 0.00842% and the 5% SEV for isomaltulose was 13.3%, a theoretical 50:50 sweetness contribution mixture with a 5% SEV would contain 0.00421% sucralose and 6.65% isomaltulose, i.e. a weight ratio of 1 to 1580. This mixture was then dissolved at various concentrations and tested in the same way as described above to obtain a 5% SEV for each mixture.

The percentage saving over the theoretical amount required can then be calculated as

$$\frac{A - B}{A} \times 100$$

or alternatively the percentage increase in sweetening power can be calculated

$$\frac{A - B}{B} \times 100$$

where A is the concentration of one component in the blend required theoretically and B is the concentration of that component of the blend found experimentally to be necessary.

On this basis the following values were obtained for 50/50 sweetness contributions from:

1. Sucralose/sucrose
     SEV = 0.00415% sucralose + 2.467% sucrose
     saving = 1.33%
2. Sucralose/isomaltulose
     SEV = 0.00372% sucralose + 5.88% isomaltulose
     saving = 11.6%.

Example 2 Carbonated lemonade sweetened to the equivalent of 10% sucrose

| | |
|---|---|
| **Sodium benzoate solution (10% w/v)** | **0.192%** |
| **Anhydrous citric acid** | **0.240%** |
| **Lemon flavour DA 05856\*** | **0.096%** |
| **Sucralose** | **0.012%** |
| **Isomaltulose** | **4.500%** |
| **Carbonated water** | **94.960%** |

**\* Naarden International**

Sweetness contribution ratio of sucralose: isomaltulose = 4: 1

Example 3 Ready to drink strawberry-flavoured milk sweetened to the equivalent of 2.5% sucrose

| | |
|---|---|
| Skimmed milk | 96.756% |
| Emulsifier, Recodan CM∗ | 0.200% |
| Colour, Ponceau 4R (E124) | 0.002% |
| Flavour, Strawberry E4468L∗∗ | 0.100% |
| Sucralose | 0.002% |
| Isomaltulose | 2.940% |

∗Grinstead Products Limited
∗∗Fries and Fries Limited
Sweetness contribution ratio of sucralose: isomaltulose = 1: 1

Example 4 Sweetening compositions comprising sucralose and isomaltulose

Sweetener compositions are prepared by:

(a) mixing 2350 g isomaltulose with 1.49 g sucralose. The resulting composition has a sweetening power equivalent to that of 2 Kg of sucrose. The synergy between isomaltulose and sucralose results in a saving of 11.6% (theoretical amounts of each component if no synergy existed are 2600 g isomaltulose and 1.68 g sucralose, each providing the equivalent of 1 Kg sucrose).

(b) mixing 1998 g isomaltulose with 1.76 g sucralose. The resulting composition has a sweetening power equivalent to that of 2 Kg of sucrose; i.e. they both provide about the same amount of sweetness per unit weight. The synergy between isomaltulose and sucralose results in a saving of about 10% (theoretical amounts of each component if no synergy existed are 2220 g isomaltulose and 1.96 g sucralose; isomaltulose providing about 40% and sucralose about 60% of the sweetness).

Example 5 Sponge Cake

Ingredients

| | |
|---|---|
| Margarine | 227 g |
| Product of Example 4(b) | 227 g |
| 4 Eggs | 230 g |
| Self raising flour | 227 g |

The margarine and sugar (product of Example 4(b)) were creamed together and the eggs were beaten in, then the flour was folded in and the mixture was baked for 25 minutes at 180°-190°C.

Example 6 Meringues

Ingredients

| | |
|---|---|
| Egg Whites (fresh) | 30 g |
| Product of Example 4(b) | 70 g |

The egg white was whipped then the product of Example 4(b) was folded in. The mixture was piped onto baking trays in 3 cm diameter portions and cooked at 65°C for 90 minutes.

Example 7 Filling for bakery products

Ingredients (parts per 100)

| | |
|---|---|
| Fat (with emulsifier) | 34.6 |
| Water | 10.0 |
| Isomaltulose | 52.2 |
| Sucralose | 0.008 |
| Milk powder | 2.89 |
| Salt | 0.302 |

The ingredients were mixed together for 4 minutes, using an electric mixer.
Sweetness contribution ratio of sucralose:isomaltulose = 1:4

## Claims

1. A sweetening composition comprising sucralose and isomaltulose, the relative sweetness contribution provided by the sucralose and the isomultulose being from 4:1 to 1:4.

2. A sweetening composition according to Claim 1, in which the said relative sweetness contribution is from 3:2 to 2:3.

3. A method of sweetening an oral composition comprising incorporating therein sucralose and isomaltulose, such that the relative sweetness contribution provided by the sucralose and the sweet saccharide is from 4:1 to 1:4.

4. A method according to Claim 3, in which the said relative sweetness contribution is from 3:2 to 2:3.

5. A method according to Claim 4 wherein the oral composition is a beverage or a confectionery product.

6. An oral composition sweetened with a sweetening composition according to Claim 1 or Claim 2.

7. An oral composition sweetened by a method according to Claim 3.

8. An oral composition according to Claim 6 or Claim 7 in the form of a beverage or confectionery product.

## Patentansprüche

1. Süßmittel-Zusammensetzung umfassend Sucralose und Isomaltulose, wobei der relative Beitrag zur Süße der von der Sucralose und der Isomaltulose bereitgestellt wird, von 4:1 bis 1:4 beträgt.

2. Süßmittel-Zusammensetzung nach Anspruch 1, dadurch gekennzeichnet, daß der relative Beitrag zur Süße 3:2 bis 2:3 beträgt.

3. Verfahren zur Süßung einer oralen Zusammensetzung, bei dem man die Sucralose und die Isomaltulose in die Zusammensetzung so einbringt, daß der von der Sucralose und dem süßen Saccharid bereitgestellte relative Beitrag zur Süße 4:1 bis 1:4 beträgt.

4. Verfahren nach Anspruch 3, dadurch gekennzeichnet, daß der relative Beitrag zur Süße 3:2 bis 2:3 beträgt.

5. Verfahren nach Anspruch 4, dadurch gekennzeichnet, daß die orale Zusammensetzung ein Getränk oder ein Konditoreiprodukt ist.

6. Orale Zusammensetzung, dadurch gekennzeichnet, daß sie mit einer Süßmittel-Zusammensetzung gemäß Anspruch 1 oder 2 gesüßt ist.

7. Orale Zusammensetzung, gesüßt mittels eines Verfahrens gemäß Anspruch 3.

8. Orale Zusammensetzung nach Anspruch 6 oder Anspruch 7 in Form eines Getränkes oder eines Konditoreiproduktes.

## Revendications

1. Une composition édulcorante comprenant du sucralose et de l'isomaltulose, l'apport édulcorant relatif fourni par le sucralose et l'isomaltulose étant compris entre 4:1 et 1:4.

2. Une composition édulcorante selon la revendication 1, dans laquelle ledit apport édulcorant relatif est compris entre 3:2 et 2:3.

3. Un procédé d'édulcoration d'une composition orale comprenant l'incorporation dans cette composition de sucralose et d'isomaltulose, de sorte que l'apport édulcorant relatif fourni par le sucralose et le saccharide sucré est compris entre 4:1 et 1:4.

4. Un procédé selon la revendication 3, dans lequel ledit apport édulcorant relatif est compris entre 3:2 et 2:3.

5. Un procédé selon la revendication 4, dans lequel la composition orale est une boisson ou un produit de confiserie.

6. Une composition orale sucrée avec une composition édulcorante selon la revendication 1 ou la revendication 2.

7. Une composition orale sucrée par un procédé selon la revendication 3.

8. Une composition orale selon la revendication 6 ou la revendication 7 sous forme d'une boisson ou d'un produit de confiserie.